# EUROPEAN PATENT APPLICATION

(11) **EP 4 568 415 A1**
(43) Date of publication of application: **11.06.2025**
(21) Application number: 23849286.2
(22) Date of filing: 28.07.2023
(51) Int. Cl.: H04W 76/15

(54) **TRAFFIC ROUTING METHOD AND APPARATUS, AND DEVICE**

(30) Priority: 03.08.2022 CN 202210929468
(71) Applicant: Vivo Mobile Communication Co., Ltd., Dongguan, Guangdong 523863 (CN)
(72) Inventor: WANG, Hui, Dongguan, Guangdong 523863 (CN); KANG, Yanchao, Dongguan, Guangdong 523863 (CN); ZHANG, Yizhong, Dongguan, Guangdong 523863 (CN)
(74) Representative: Conti, Marco
(86) International application number: PCT/CN2023/109770
(87) International publication number: WO 2024/027578

(57) **Abstract**

This application pertains to the field of communication technologies, and discloses a traffic routing method and apparatus, and a device. The method in embodiments of this application includes: acquiring, by a first communication device, a first rule, where the first rule is used to establish a same data transmission channel or different data transmission channels for one or more personal Internet of Things network PIN elements PINEs of a PIN, and the first communication device and the one or more PINEs are located in the same PIN; and establishing, by the first communication device, a data transmission channel based on the first rule.

## Description

### CROSS-REFERENCE TO RELATED APPLICATIONS

This application claims priority to Chinese Patent Application No. 202210929468.3, filed in China on August 3, 2022, which is incorporated herein by reference in its entirety.

### TECHNICAL FIELD

This application pertains to the field of communication technologies, and specifically relates to a traffic routing method and apparatus, and a device.

### BACKGROUND

With development of science and technology, the Internet of Things becomes increasingly popular, and the concept of personal Internet of Things network (Personal IoT Network, PIN) is put forward. In the PIN, a personal Internet of Things network element (PIN Element, PINE) accesses a PIN gateway (PIN Element with Gateway Capability, PEGC) by using a non-3GPP technology (such as mobile hotspot Wi-Fi or Bluetooth), and then accesses the network through the PEGC by using a 3rd Generation Partnership Project (3rd Generation Partnership Project, 3GPP) technology. The PEGC is a PIN element having a gateway capability.

Functions of PINEs (such as an air conditioner and a printer) are different, and quality of service (Quality of Service, QoS) requirements for data transmission also vary. This requires that the PEGC should provide flows with differentiated QoS for the PINEs. Therefore, how the PEGC routes traffic on a PINE to an appropriate PDU session has become an urgent problem to be resolved.

### SUMMARY

Embodiments of this application provide a traffic routing method and apparatus, and a device to route traffic on a PINE to an appropriate PDU session.

According to a first aspect, a traffic routing method is provided and includes:
acquiring, by a first communication device, a first rule, where the first rule is used to establish a same data transmission channel or different data transmission channels for one or more personal Internet of Things network PIN elements PINEs of a PIN, and the first communication device and the one or more PINEs are located in the same PIN; and
establishing, by the first communication device, a data transmission channel based on the first rule.

According to a second aspect, a traffic routing apparatus is provided and includes:
an acquisition module, configured to acquire a first rule, where the first rule is used to establish a same data transmission channel or different data transmission channels for one or more PINEs of a PIN, and a first communication device and the one or more PINEs are located in the same PIN; and
a processing module, configured to establish a data transmission channel based on the first rule.

According to a third aspect, a traffic routing method is provided and includes:
determining, by a second communication device, a first rule, where the first rule is used to establish a same data transmission channel or different data transmission channels for one or more PINEs of a PIN; and
sending, by the second communication device, the first rule.

According to a fourth aspect, a traffic routing apparatus is provided and includes:
a determining module, configured to determine a first rule, where the first rule is used to establish a same data transmission channel or different data transmission channels for one or more PINEs of a PIN; and
a first sending module, configured to send the first rule.

According to a fifth aspect, a traffic routing method is provided and includes:
sending, by a fifth communication device, at least one of the following to a second communication device:
first information, used for the second communication device to determine a UE route selection policy (UE Route Selection Policy, URSP) rule; and
second information, used for the second communication device to determine a PIN routing rule, where
the URSP rule and/or the PIN routing rule is used as a first rule to establish a same data transmission channel or different data transmission channels for one or more PINEs of a PIN.

According to a sixth aspect, a traffic routing apparatus is provided and includes:
a second sending module, configured to send at least one of the following to a second communication device:
first information, used for the second communication device to determine a URSP rule; and
second information, used for the second communication device to determine a PIN routing rule, where
the URSP rule and/or the PIN routing rule is used as a first rule to establish a same data transmission channel or different data transmission channels for one or more PINEs of a PIN.

According to a seventh aspect, a terminal is provided. The terminal includes a processor and a memory. The memory stores a program or instructions capable of running on the processor. When the program or instructions are executed by the processor, the steps of the method according to the first aspect are implemented.

According to an eighth aspect, a terminal is provided and includes a processor and a communication interface. The processor is configured to: acquire a first rule, where the first rule is used to establish a same data transmission channel or different data transmission channels for one or more PINEs of a PIN, and a first communication device and the one or more PINEs are located in the same PIN; and establish a data transmission channel based on the first rule.

According to a ninth aspect, a network-side device is provided. The network-side device includes a processor and a memory. The memory stores a program or instructions capable of running on the processor. When the program or instructions are executed by the processor, the steps of the method according to the third aspect or the fifth aspect are implemented.

According to a tenth aspect, a network-side device is provided and includes a processor and a communication interface, where
the processor is configured to determine a first rule, where the first rule is used to establish a same data transmission channel or different data transmission channels for one or more PINEs of a PIN; and the communication interface is configured to send the first rule; or
the communication interface is configured to send at least one of the following to a second communication device:
   first information, used for the second communication device to determine a URSP rule; and
   second information, used for the second communication device to determine a PIN routing rule, where
   the URSP rule and/or the PIN routing rule is used as a first rule to establish a same data transmission channel or different data transmission channels for one or more PINEs of a PIN.

According to an eleventh aspect, a traffic routing system is provided and includes a terminal and a network-side device. The terminal may be configured to perform the steps of the traffic routing method according to the first aspect. The network-side device may be configured to perform the steps of the traffic routing method according to the third aspect or the fifth aspect.

According to a twelfth aspect, a readable storage medium is provided. The readable storage medium stores a program or instructions. When the program or instructions are executed by a processor, the steps of the traffic routing method according to the first aspect are implemented, or the steps of the traffic routing method according to the third aspect are implemented, or the steps of the traffic routing method according to the fifth aspect are implemented.

According to a thirteenth aspect, a chip is provided. The chip includes a processor and a communication interface. The communication interface is coupled to the processor. The processor is configured to run a program or instructions to implement the traffic routing method according to the first aspect, or implement the traffic routing method according to the third aspect, or implement the traffic routing method according to the fifth aspect.

According to a fourteenth aspect, a computer program or program product is provided. The computer program or program product is stored in a storage medium. The computer program or program product is executed by at least one processor to implement the steps of the traffic routing method according to the first aspect, or implement the steps of the traffic routing method according to the third aspect, or implement the steps of the traffic routing method according to the fifth aspect.

In the embodiments of this application, after the first communication device acquires the first rule, the first communication device can establish the same data transmission channel or different data transmission channels for the one or more PINEs in the PIN in which the first communication device is located, thereby implementing differentiated traffic routing for different types of PINEs and ensuring that network elements in the PIN use network services with high efficiency and high quality.

### BRIEF DESCRIPTION OF DRAWINGS

FIG. 1 is a block diagram of a wireless communication system;
FIG. 2 is a first schematic flowchart of a method according to an embodiment of this application;
FIG. 3 is a schematic diagram of a 5GS PIN feature support IE according to an embodiment of this application;
FIG. 4 is a schematic diagram of a 5GS update type IE according to an embodiment of this application;
FIG. 5 is a schematic diagram of a PIN container IE according to an embodiment of this application;
FIG. 6 is a schematic diagram of content of a PIN container including one or more PIN parameters according to an embodiment of this application;
FIG. 7 is a first schematic application diagram of a method according to an embodiment of this application;
FIG. 8 is a second schematic application diagram of a method according to an embodiment of this application;
FIG. 9 is a third schematic application diagram of a method according to an embodiment of this application;
FIG. 10 is a fourth schematic application diagram of a method according to an embodiment of this application;
FIG. 11 is a second schematic flowchart of a method according to an embodiment of this application;
FIG. 12 is a third schematic flowchart of a method according to an embodiment of this application;
FIG. 13 is a first schematic modular diagram of an apparatus according to an embodiment of this application;
FIG. 14 is a second schematic modular diagram of an apparatus according to an embodiment of this application;
FIG. 15 is a third schematic modular diagram of an apparatus according to an embodiment of this application;
FIG. 16 is a schematic diagram of a structure of a communication device according to an embodiment of this application;
FIG. 17 is a schematic diagram of a structure of a terminal according to an embodiment of this application; and
FIG. 18 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

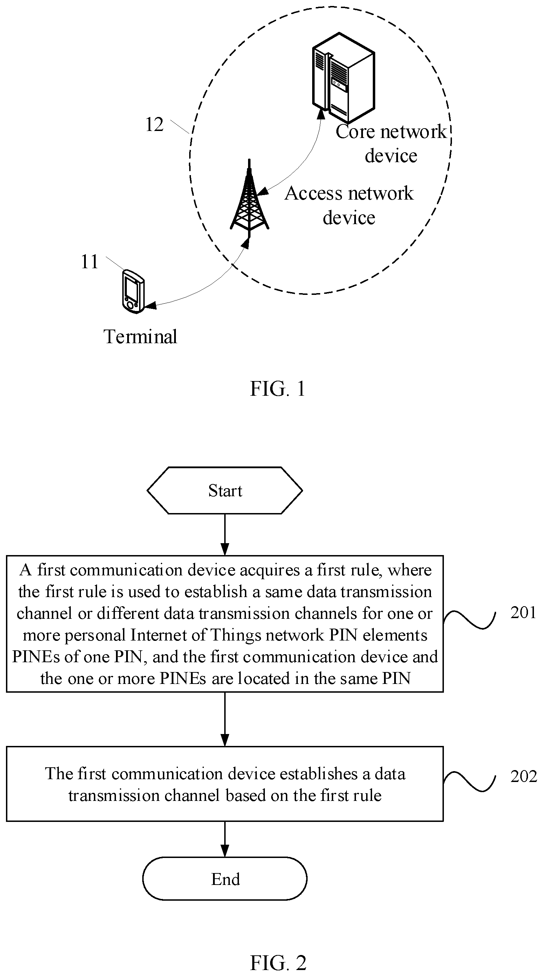

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), a management function (Management Function, MF), or the like. It should be noted that in the embodiments of this application, only a core network device in the NR system is used as an example for description, but a specific type of the core network device is not limited.

For ease of understanding, the following describes some content in the embodiments of this application.

A PIN is a group including at least one PIN element, where at least one PIN element is a terminal. There are three types of PIN elements: a PINE, a PEGC, and a PIN management device (PIN Element with Management Capability, PEMC). A PINE is a terminal or a non-3GPP device. The non-3GPP device is a device that does not use a credential defined by the 3GPP, a device that does not support a non-access stratum (Non-Access Stratum, NAS) protocol defined by the 3GPP, or a device that does not support 3GPP access technologies (such as 3G/4G/5G air interface technologies) but supports only non-3GPP access technologies (such as Wi-Fi, fixed network, and Bluetooth access technologies).

The PINE can access a network through the PEGC to use network services and data. Functions of PINEs (such as an air conditioner and a printer) are different, and QoS requirements for data transmission also vary. In addition, PINEs may belong to different PINs. Considering that PINEs cannot directly communicate with the network, it is necessary for the PEGC to identify traffic of different PINEs and provide differentiated traffic transmission for different PINEs.

A traffic routing method and apparatus, and a device provided in embodiments of this application are hereinafter described in detail by using some embodiments and application scenarios thereof with reference to the accompanying drawings.

As shown in FIG. 2, an embodiment of this application provides a traffic routing method, including the following steps.

Step 201: A first communication device acquires a first rule, where the first rule is used to establish a same data transmission channel or different data transmission channels for one or more personal Internet of Things network PIN elements PINEs of a PIN, and the first communication device and the one or more PINEs are located in the same PIN.

Step 202: The first communication device establishes a data transmission channel based on the first rule.

In this way, after acquiring the first rule by performing step 201, the first communication device can perform step 202. The first communication device establishes the same data transmission channel or different data transmission channels for the one or more PINEs in the PIN in which the first communication device is located, thereby implementing differentiated traffic routing for different types of PINEs and ensuring that network elements in the PIN use network services with high efficiency and high quality.

It should be noted that in this embodiment of this application, the first communication device may be a PEGC. In addition, a data transmission channel is implemented through a protocol data unit (Protocol Data Unit, PDU) session. Establishing a data transmission channel may be establishing a data transmission channel by establishing a PDU session, or may be understood as establishing a data transmission channel by selecting an appropriate PDU session from existing PDU sessions.

In some embodiments, optionally, the first rule includes a mapping relationship between PIN description information (PIN descriptors) and protocol data unit PDU session parameters.

Herein, the PIN description information is used to match an applicable first rule for one or more PINEs for which a data transmission channel is to be established when the first communication device performs step 202. After the first communication device matches the used first rule, the first communication device finds corresponding PDU session parameters by using the mapping relationship, and establishes the data transmission channel.

The PDU session parameters may include a data network name (data network name, DNN), single network slice selection assistance information (Single Network Slice Selection Assistance Information, S-NSSAI), and the like.

In some embodiments, optionally, in a case that the first rule is used to establish the same data transmission channel for the one or more PINEs of the PIN, the PIN description information includes at least one of the following:
a PIN type;
a service type;
a PIN identifier; and
first indication information, where the first indication information is used to indicate one or more PINEs that use network services through a PIN gateway in the PIN.

In this way, the first rule can be used to establish the same data transmission channel for one or more PINEs meeting at least one of the following conditions:
a PIN type of the PIN is the PIN type included in the PIN description information;
a service type of the PINE is the service type included in the PIN description information;
the PIN corresponds to the PIN identifier included in the PIN description information; and
the PINE is a PINE indicated by the first indication information of the PIN description information.

The PIN type is used to identify the type of a PIN, which may be classified into broad categories, such as personal entertainment, smart home, and sports and health, or may be classified into narrow categories, such as a sensor type, augmented reality (Augmented Reality, AR) or virtual reality (Virtual Reality, VR), smart lighting, sockets, and screen casting devices. The service type is used to identify service classification. Different service types, such as a game type, an office type, and a home type, require different QoS. The PIN identifier (Identifier, ID) is used to identify a PIN or a PIN group, and the PIN identifier may also be referred to as a PIN group identifier.

The first indication information may be indicated by a PINE identifier, and the PINE identifier may be at least one of the following:
a source Internet Protocol range (Source IP range), a service set identifier (Service Set IDs, SSIDs), a Bluetooth identifier (BlueTooth IDs, BT IDs), a data packet filter (Packet filters), a port range (Port range), a physical address (Media Access Control address, MAC address), and an application identifier (Application IDs, APP IDs).

In some embodiments, optionally, in a case that the first rule is used to establish different data transmission channels for the one or more PINEs of the PIN, the PIN description information includes at least one of the following:
a service type;
second indication information, where the second indication information is used to indicate whether the PINE is an internal device or an external device; and
third indication information, where the third indication information is used to indicate one or more PINEs in a same group.

In this way, the first rule can be used to implement at least one of the following:
establishing different data transmission channels for PINEs of different service types based on the service type included in the PIN description information;
establishing different data transmission channels for an internal PINE and an external PINE based on the second indication information included in the PIN description information; and
establishing different data transmission channels for PINEs in different groups based on the third indication information included in the PIN description information.

If the second indication information indicates that a PINE is an internal device (also referred to as an internal PINE), it indicates that the PINE is configured in the current PIN; or if the second indication information indicates that a PINE is an external device (also referred to as an external PINE), it indicates that the PINE is not configured in the current PIN and that the PINE joins the current PIN temporarily. The one or more PINEs in the same group indicated by the third indication information meet grouping requirements of similar service types and the same QoS requirement.

The second indication information and the third indication information may also be indicated by a PINE identifier. A specific implementation of the PINE identifier is described above, and is not illustrated herein.

Optionally, the first rule is at least one of the following:
a URSP rule; and
a PIN routing rule.

In other words, the URSP rule may be used as the first rule, and the PIN routing rule may also be used as the first rule.

Optionally, traffic description information of the URSP rule includes PIN description information.

In other words, as the first rule, the URSP rule should include the PIN description information in its traffic description information (a specific implementation of the PIN description information is described above, and is not described herein again), for example, as shown in the following Table 1.

**Table 1**

| Information name (Information name) | Description (Description) | Category (Category) | PCF permitted to modify in a UE context (PCF permitted to modify in a UE context) | Scope (Scope) |
|---|---|---|---|---|
| Rule precedence (Rule Precedence) | Determines the order the URSP rule is enforced in the UE. (Determines the order the URSP rule is enforced in the UE.) | Mandatory (Mandatory) | Yes (Yes) | UE context (UE context) |
| Traffic description information (Traffic descriptor) | This part defines the traffic descriptor components for the URSP rule. (This part defines the Traffic descriptor components for the URSP rule.) | Mandatory (Mandatory) | | |
| Application description Information (Application descriptors) | It consists of OSId and OSAppId(s). (It consists of OSId and OSAppId(s).) (NOTE 2) | Optional (Optional) | Yes (Yes) | UE context (UE context) |
| IP description information (IP descriptors) (NOTE 5) | Destination IP 3 tuple(s) (IP address or IPv6 network prefix, port number, protocol ID of the protocol above IP). (Destination IP 3 tuple(s) (IP address or IPv6 network prefix, port number, protocol ID of the protocol above IP).) | Optional (Optional) | Yes (Yes) | UE context (UE context) |
| Domain description information (Domain descriptors) | FQDN(s) or a regular expression used as a domain name matching criterion (FQDN(s) or a regular expression which are used as a domain name matching criteria) (NOTE 6). | Optional (Optional) | Yes (Yes) | UE context (UE context) |
| Non-IP description information (Non-IP descriptors) (NOTE 5) | Descriptor(s) for destination information of non-IP traffic (Descriptor(s) for destination information of non-IP traffic) | Optional (Optional) | Yes (Yes) | UE context (UE context) |
| Data network name (DNN) | This is matched against the DNN information provided by the application. (This is matched against the DNN information provided by the application.) | Optional (Optional) | Yes (Yes) | UE context (UE context) |
| Connection capabilities (Connection Capabilities) | This is matched against the information provided by a UE application when it requests a network connection with certain capabilities. (This is matched against the information provided by a UE application when it requests a network connection with certain capabilities.) (NOTE 4) | Optional (Optional) | Yes (Yes) | UE context (UE context) |
| PIN description information (PIN descriptors) | This is matched against the PIN information provided by the PEGC. (This is matched against the PIN information provided by the PEGC.) | Optional (Optional) | Yes (Yes) | UE context (UE context) |

In some embodiments, optionally, the URSP rule is used by the first communication device to establish or select an appropriate PDU session for traffic of one or more PINEs having the same QoS requirement.

For example, the URSP rule is shown in Table 2.

**Table 2**

| | | |
|---|---|---|
| Rule precedence (Rule Precedence) = 1 | Route selection description information precedence (Route Selection Descriptor Precedence) = 1 Network slice selection (Network Slice Selection): S-NSSAI-a SSC mode selection (SSC Mode Selection): SSC Mode 3 DNN selection (DNN Selection): internet Access type preference (Access Type preference): 3GPP access | This URSP rule associates the traffic of application "PIN1" with S-NSSAI-a, SSC Mode 3, 3GPP access and the "internet" DNN. (This URSP rule associates the traffic of application "PIN1" with S-NSSAI-a, SSC Mode 3, 3GPP access and the "internet" DNN.) |
| Traffic description information (Traffic Descriptor): PIN descriptor=PIN1 | | |
| | | It enforces the following routing policy: The traffic belonging to PIN1 should be transferred on a PDU session supporting S-NSSAI-a, SSC Mode 3 and DNN=internet over 3GPP access. If this PDU session is not established, the UE shall attempt to establish a PDU session with S-NSSAI-a, SSC Mode 3 and the "internet" DNN over 3GPP access (It enforces the following routing policy: The traffic belonging to PIN1 should be transferred on a PDU Session supporting S-NSSAI-a, SSC Mode 3 and DNN=internet over 3GPP access. If this PDU Session is not established, the UE shall attempt to establish a PDU Session with S-NSSAI-a, SSC Mode 3 and the "internet" DNN over 3GPP access) |

It should be noted that the first rule may be preconfigured and stored in the first communication device, and the first communication device performs step 201 to retrieve the locally stored first rule.

Alternatively, the first rule is configured by other communication devices. Therefore, optionally, step 201 includes at least one of the following:
receiving the URSP rule sent by a second communication device;
receiving the PIN routing rule sent by a third communication device; and
receiving the PIN routing rule sent by a fourth communication device.

Herein, the second communication device may be a PCF; the third communication device may be an AMF; and the fourth communication device may be an SMF.

Optionally, the method further includes:
the first communication device sends related information of the first communication device, where the related information of the first communication device includes at least one of the following:
capability information (PEGC capability) of the first communication device, where the capability information of the first communication device is used to indicate that the first communication device has a gateway capability;
indication information (PEGC indication) of the first communication device, where the indication information of the first communication device is used to identify the first communication device; and
a policy container (PEGC UE policy request) of the first communication device, where the policy container of the first communication device is used to request a URSP rule.

Herein, the first communication device sends the related information of the first communication device to the second communication device, so that the second communication device can determine the URSP rule and send the URSP rule to the first communication device (for example, provide the URSP rule to the PEGC through a terminal configuration update process).

Correspondingly, the second communication device acquires the related information of the first communication device, and determines the URSP rule based on the related information of the first communication device. Therefore, the first communication device can use the URSP rule as the first rule and complete establishment of the data transmission channel.

Optionally, the first communication device sends a registration request, where the registration request carries the related information of the first communication device.

In this case, the second communication device is the PCF, and the related information of the first communication device can be obtained by receiving a first message, where the first message includes the related information of the first communication device carried in the registration request. The first message is sent by the AMF.

In some embodiments, optionally, in a case that the registration request includes the capability information of the first communication device, the capability information of the first communication device is included in a PIN gateway capability information field of a third information element, and the third information element includes at least one of the following: a 5GS mobility management information element, a PIN gateway capability information element, and a 5GS update type information element; or
in a case that the registration request includes the policy container of the first communication device, the policy container of the first communication device is included in a payload container information element, and a payload container type of the payload container information element is set to a terminal policy container or a PIN gateway policy container.

Optionally, a PEGC capability bit is added to the 5GS mobility management information element (5GMM capability IE), for example, PIN element with gateway capability (PIN element with gateway capability) (octet X, bit Y), where "0" means PIN element with gateway capability not supported (PIN element with gateway capability not supported), and "1" means PIN element with gateway capability supported (PIN element with gateway capability supported).

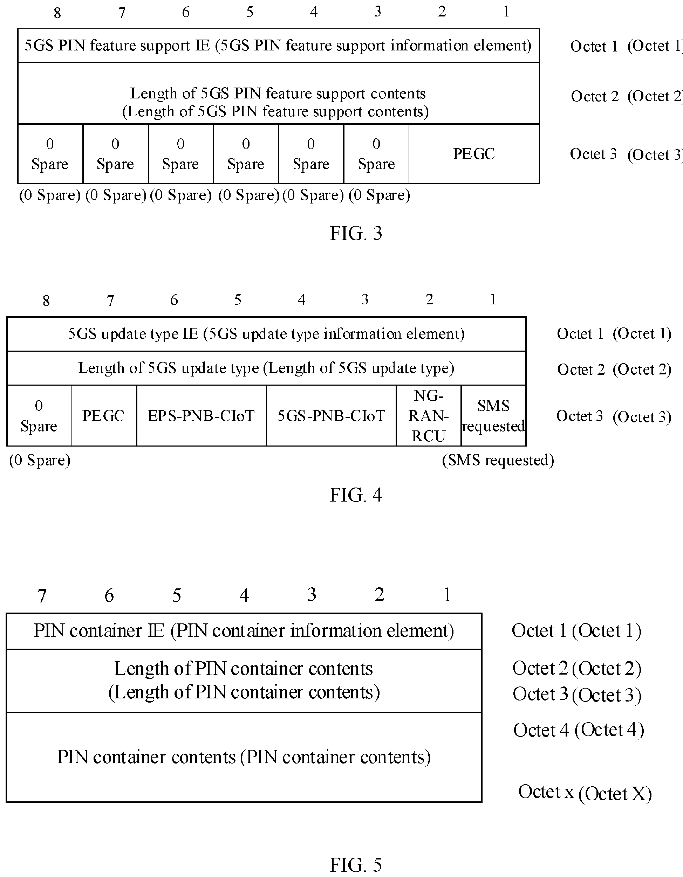

Optionally, the PIN gateway capability information element (PIN element with gateway capability IE) may be a 5GS PIN feature support IE, to indicate whether the UE supports some PIN features. Coding of the 5GS PIN feature support IE is shown in FIG. 3. The 5GS PIN feature support IE is a category-4 information element with a length of 3 octets. The PIN gateway capability information element may be shown in the following Table 3.

**Table 3**

| | | |
|---|---|---|
| Paging restriction decision (Paging restriction decision, PRD) (bits 2 to 1 of octet 3) | | |
| Bits | | |
| 2 | 1 | |
| 0 | 0 | no additional information (no additional information) |
| 0 | 1 | PIN element with gateway capability is supported (PIN element with gateway capability is supported) |
| 1 | 0 | PIN element with gateway capability is not supported (PIN element with gateway capability is not supported) |
| All other values are reserved. (All other values are reserved.) | | |
| Bits 3 to 8 of octet 3 are spare and shall be coded as zero. (Bits 3 to 8 of octet 3 are spare and shall be coded as zero.) | | |

A purpose of the 5GS update type information element (5GS update type IE) is to allow the terminal to provide additional information to the network in a process of performing registration. Coding of the 5GS update type IE is shown in FIG. 4. The 5GS update type IE is a category-4 information element with a length of 3 octets. The 5GS update type IE may be shown in the following Table 4.

**Table 4**

| | | | | |
|---|---|---|---|---|
| SMS over NAS transport requested (SMS requested) (SMS over NAS transport requested (SMS requested)) (octet 3, bit 1) | | | | |
| Bit | | | | |
| 1 | | | | |
| 0 | | SMS over NAS not supported (SMS over NAS not supported) | | |
| 1 | | SMS over NAS supported (SMS over NAS supported) | | |
| 5G-RAN capability update (NG-RAN Radio Capability Update (NG-RAN-RCU)) (octet 3, bit 2) | | | | |
| Bit | | | | |
| 2 | | | | |
| 0 | | UE radio capability update not needed (UE radio capability update not needed) | | |
| 1 | | UE radio capability update needed (UE radio capability update needed) | | |
| For a list of RATs for which a radio capability update can be triggered by means of this indication, see subclause 5.5.1.3.2, case n (For a list of RATs for which a radio capability update can be triggered by means of this indication see subclause 5.5.1.3.2, case n) | | | | |
| 5GS preferred CIoT network behavior (5GS PNB-CIoT) (5GS Preferred CIoT network behaviour (5GS PNB-CIoT)) (octet 3, bits 3 and 4) | | | | |
| Bits | | | | |
| 4 | 3 | | | |
| 0 | 0 | no additional information (no additional information) | | |
| 0 | 1 | control plane CIoT 5GS optimization (control plane CIoT 5GS optimization) | | |
| 1 | 0 | user plane CIoT 5GS optimization (user plane CIoT 5GS optimization) | | |
| 1 | 1 | reserved (reserved) | | |
| EPS preferred CIoT network behavior (EPS Preferred CIoT network behaviour (EPS-PNB-CIoT)) (octet 3, bits 5 and 6) | | | | |
| Bits | | | | |
| | | 6 | 5 | |
| | | 0 | 0 | no additional information (no additional information) |
| | | 0 | 1 | control plane CIoT EPS optimization (control plane CIoT EPS optimization) |
| | | 1 | 0 | user plane CIoT EPS optimization (user plane CIoT EPS optimization) |
| | | 1 | 1 | reserved (reserved) |
| PIN element with gateway capability (PEGC) (octet 3, bit 7) | | | | |
| Bit | | | | |
| 7 | | | | |
| 0 | | PEGC not supported (PEGC not supported) | | |
| 1 | | PEGC supported (PEGC supported) | | |
| Bits 7 to 8 of octet 3 are spare and shall be coded as zero. (Bits 7 to 8 of octet 3 are spare and shall be coded as zero.) | | | | |

The PEGC UE policy request is included in the payload container information element. The payload container information element, such as a payload container IE, may be a payload container IE whose payload container type (Payload container type) is set to a UE policy container (UE policy container), or a payload container IE whose payload container type is set to a PIN gateway policy container (such as a PEGC UE policy container or a PIN policy container). The PIN gateway policy container is a new payload container type.

In some embodiments, optionally, in a case that the payload container type of the payload container information element is set to the terminal policy container, the registration request includes at least one of the following:
the capability information of the first communication device; and
the indication information of the first communication device.

In other words, when the payload container type IE of the registration request is set to "UE policy container" and the payload container IE includes the terminal policy container of the first communication device, the registration request may further include the PEGC indication and/or PEGC capability as described above.

Optionally, in a case that the payload container type of the payload container information element is set to the PIN gateway policy container, the registration request includes at least one of the following:
a state indication message of the first communication device; and
a state indication message of the PIN in which the first communication device is located.

In other words, when the payload container type IE of the registration request is set to "PEGC UE policy container" or "PIN policy container", and the payload container IE includes the terminal policy container of the first communication device, the registration request may further include the state indication message of the first communication device (PEGC UE STATE INDICATION message) and/or the state indication message of the PIN in which the first communication device is located (PIN STATE INDICATION message).

Optionally, after the PCF receives the PEGC indication, the PCF may search, based on the PEGC indication, for subscription information corresponding to the PEGC. An implementation of the PEGC indication may be any one of the following: a generic public subscription identifier (Generic Public Subscription Identifier, GPSI), a subscription permanent identifier (Subscription Permanent Identifier, SUPI), and a PEGC ID. The PEGC indication may further include a PIN identifier.

In some embodiments, optionally, the PCF receives the related information of the first communication device that is sent by the PIN AF and that includes only the indication information of the first communication device, and then determines the URSP rule based on the indication information of the first communication device.

In some embodiments, optionally, the second communication device acquires first information, and determines the URSP rule based on the first information. Then the URSP rule is sent to the first communication device (for example, the URSP rule is provided to the PEGC through a terminal configuration update process), so that the first communication device can use the URSP rule as the first rule and complete the establishment of the data transmission channel.

Optionally, the second communication device receives first information sent by a fifth communication device, where the fifth communication device may be a PIN MF.

Optionally, the first information includes at least one of the following:
one or more PIN routing rules; and
sixth indication information, where the sixth indication information is used to instruct the second communication device to acquire subscription information of the first communication device from a UDM to determine the URSP rule.

In this way, the PCF can determine the URSP rule based on the one or more PIN routing rules in the first information. For example, there is a preset association relationship between a PIN routing rule and a URSP rule, and the PCF can find the corresponding URSP rule based on the association relationship after learning the one or more PIN routing rules. The PCF may also query the UDM for the subscription information of the first communication device based on the sixth indication information in the first information, and determine the URSP rule based on the subscription information of the first communication device. The subscription information may include the URSP rule, or there is a preset association relationship between subscription information and a URSP rule, and the PCF can find the corresponding URSP rule based on the association relationship after learning the subscription information.

The sixth indication information may include a PEGC identifier, and may further include a PEMC identifier or a PIN identifier.

In some embodiments, optionally, the second communication device acquires second information, and determines the PIN routing rule based on the second information. Then the PIN routing rule is sent to the first communication device, so that the first communication device can use the PIN routing rule as the first rule and complete the establishment of the data transmission channel.

Optionally, the second communication device acquires second information sent by a fifth communication device, where the fifth communication device may be a PIN MF.

Optionally, the second information includes at least one of the following:
one or more PIN routing rules;
seventh indication information, where the seventh indication information is used to instruct the second communication device to acquire subscription information of the first communication device from a UDM to determine the PIN routing rule; and
eighth indication information, where the eighth indication information is used to indicate that the second communication device does not provide the URSP rule.

In this way, the PCF can determine the one or more PIN routing rules in the second information as the PIN routing rule to be sent to the first communication device. The PCF may also query the UDM for the subscription information of the first communication device based on the seventh indication information in the second information, and determine the PIN routing rule based on the subscription information of the first communication device. The subscription information may include the PIN routing rule, or there is a preset association relationship between subscription information and a PIN routing rule, and the PCF can find the corresponding PIN routing rule based on the association relationship after learning the subscription information.

The second information may also include the eighth indication information indicating that the second communication device does not provide the URSP rule. In this way, after receiving the second information, the second communication device can determine the PIN routing rule based on the eighth indication information, and send the determined PIN routing rule to the first communication device without determining the URSP rule.

Optionally, in a case that at least one of the first information and the second information does not include one or more PIN routing rules, the fifth communication device acquires PIN related information; and
the fifth communication device determines the one or more PIN routing rules based on the PIN related information.

The PIN related information includes a PIN ID, a list of services (list of services), a PIN class (PIN class), a time window (time window), and the like. The PIN MF generates PIN routing rules based on the PIN related information and a local configuration. Herein, the local configuration is used as a PIN routing rule generation policy to generate the PIN routing rules based on the PIN related information.

Optionally, the PIN related information may be carried when the PEGC or PEMC registers with the PIN MF.

In some embodiments, optionally, after the second communication device determines the URSP rule, the second communication device sends the URSP rule to the first communication device, for example, sends the URSP rule to the first communication device through a terminal configuration update procedure.

In some embodiments, optionally, after the second communication device determines the PIN routing rule, the second communication device may send the PIN routing rule to the third communication device and/or the fourth communication device, which then sends the PIN routing rule to the first communication device.

In some embodiments, optionally, the receiving the PIN routing rule sent by a third communication device includes:
receiving the PIN routing rule transmitted by using a downlink non-access stratum transport message, where the PIN routing rule is included in a first information element of the downlink non-access stratum transport message, and the first information element includes at least one of the following:
a payload container information element, where a payload container type of the payload container information element is set to a terminal policy container;
a payload container information element, where a payload container type of the payload container information element is set to a PIN gateway policy container; and
a PIN routing rule information element.

In other words, the first communication device receives the PIN routing rule obtained from the AMF by using the downlink non-access stratum transport (DL NAS transport) message. The DL NAS transport message may carry the PIN routing rule by using at least one of the foregoing information elements. The PIN routing rule is transparently transmitted to the first communication device.

The payload container information element whose payload container type is set to the terminal policy container may be reused to carry the PIN routing rule; or the PIN gateway policy container (indicating that the IE is used to carry a PEGC UE policy, such as a PEGC UE policy container or PIN policy container) is added to the payload container type (Payload container type), and the payload container information element whose payload container type is set to the PIN gateway policy container carries the PIN routing rule; or the PIN routing rule information element (PIN policy container IE) is added to carry the PIN routing rule.

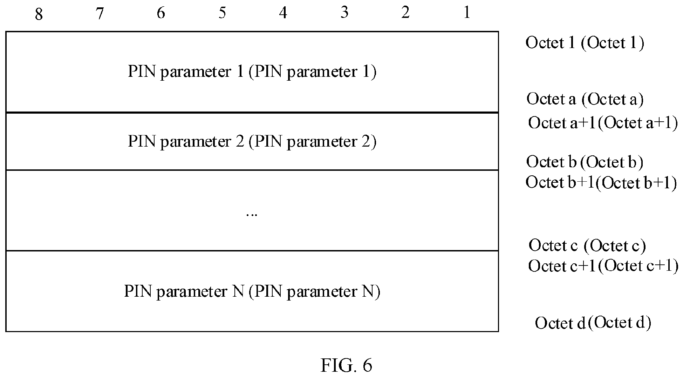

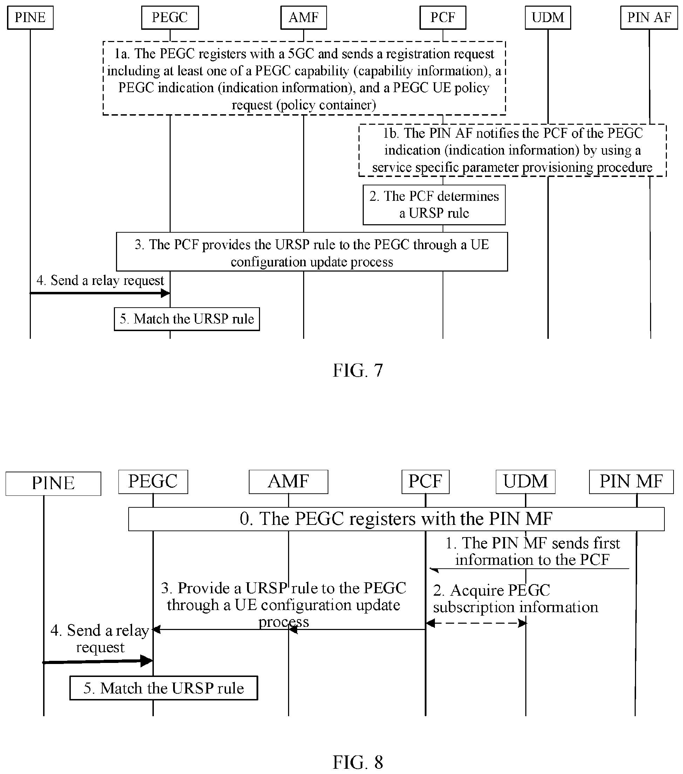

The PIN policy container IE, such as the PIN container IE, is shown in FIG. 5. Content of the PIN container includes one or more PIN parameters, and coding thereof is shown in FIG. 6 and FIG. 7 and the following Table 5.

**Table 5**

| | | | | | | | | |
|---|---|---|---|---|---|---|---|---|
| The PIN parameter identifier is encoded as follows (The PIN parameter identifier is encoded as follows): | | | | | | | | |
| Bits | | | | | | | | |
| 8 | 7 | 6 | 5 | 4 | 3 | 2 | 1 | |
| 0 | 0 | 0 | 0 | 0 | 0 | 0 | 1 | PIN routing rule (PIN routing rule) |
| All other values are spare (All other values are spare.) | | | | | | | | |

In some embodiments, optionally, the receiving the PIN routing rule sent by a fourth communication device includes:
receiving the PIN routing rule transmitted by using a PDU session modification command, where the PIN routing rule is included in a second information element of the PDU session modification command, and the second information element includes at least one of the following:
a serving public land mobile network PLMN rate control information element;
an extended protocol configuration option information element; and
a PIN routing rule information element.

In some embodiments, optionally, the first communication device may also receive the PIN routing rule sent by the fourth communication device, and the PIN routing rule is determined by the SMF based on a local configuration and PIN information.

Herein, the PIN routing rule information element is described above, and is not described herein again.

In some embodiments, optionally, the first communication device may also receive a PIN routing rule sent by the PEMC, where the PIN routing rule is acquired by the PEMC from the PIN MF. The PEMC sends the PIN routing rule in a preset transmission mode, where the preset transmission mode includes at least one of the following:
transmission through a non-3GPP connection;
transmission through an application layer; and
transmission through a PIN protocol layer.

In some embodiments, optionally, that the first communication device establishes a data transmission channel based on the first rule includes:
the first communication device determines, based on PINE description information of a first PINE, candidate rules matching the first PINE, where the candidate rules include one or more first rules; and
in a case that the candidate rules include one first rule, establishes a data transmission channel for the first PINE by using the first rule; or
in a case that the candidate rules include a plurality of first rules, establishes a data transmission channel for the first PINE by using a first rule with highest precedence.

In other words, in a case that the data transmission channel is established for the first PINE, the candidate rules matching the first PINE are first determined based on the PINE description information of the first PINE, and then, based on the candidate rules, if the candidate rules include one first rule, the data transmission channel of the first PINE is established by using the first rule; or in a case that the candidate rules include a plurality of first rules, the data transmission channel of the first PINE is established by using the first rule with highest precedence. Herein, the precedence is preconfigured rule precedence.

Optionally, the method further includes:
receiving at least one of the following sent by a fifth communication device:
fourth indication information, where the fourth indication information is used to indicate that the second communication device does not provide the URSP rule; and
fifth indication information, where the fifth indication information is used to indicate that traffic of the same PIN matches a same PDU session.

Herein, the first communication device receives the fourth indication information from the fifth communication device, and no data transmission channel is established subsequently by matching the URSP rule based on the fourth indication information; and the first communication device receives the fifth indication information from the fifth communication device, and the traffic of the same PIN matches the same PDU session based on the fifth indication information. Optionally, the first communication device receives the fourth indication information and/or the fifth indication information before or after receiving the second information.

The following describes applications of the method embodiments of this application with reference to specific scenarios.

Scenario 1: As shown in FIG. 7, a first communication device (PEGC) receives a URSP rule sent by a second communication device (PCF) or a PIN AF, and establishes a data transmission channel based on the URSP rule.

1a. The PEGC registers with a 5GC and sends a registration request to an AMF. The registration request includes at least one of the following:
- PEGC capability;
- PEGC indication; and
- PEGC UE policy request.

The AMF sends a first message to the PCF, where the first message includes at least one of the following items carried in the registration request.

1b. The PIN AF notifies the PCF of a PEGC indication by using a service specific parameter provisioning (Service specific parameter provisioning) procedure.

### 2. The PCF determines the URSP rule.

Specifically, the PCF may determine the URSP rule based on at least one of the PEGC capability, the PEGC indication, and the PEGC UE policy request included in the received registration request; or the PCF may determine the URSP rule based on the received PEGC indication sent by the PIN AF.
3. The PCF provides the URSP rule to the PEGC through a UE configuration update process.
4. A PINE sends a relay request to the PEGC.
5. The PEGC matches an appropriate URSP rule based on PINE information, and selects an appropriate PDU session based on PDU session parameters in the matched URSP rule. If no PDU session has been established, the PEGC establishes a new PDU session based on the PDU session parameters in the matched URSP rule.

Scenario 2: As shown in FIG. 8, a first communication device (PEGC) receives a URSP rule sent by a second communication device (PCF), and establishes a data transmission channel based on the URSP rule.
0. The PEGC registers with a PIN MF. In the registration process, the PIN MF may provide PIN related information to the PEGC, including a PIN ID, a list of PINEs, a PEGC ID, and the like.
1. The PIN MF sends first information to the PCF, where the first information includes at least one of the following:
   one or more PIN routing rules; and
   sixth indication information, also referred to as PIN routing rule acquisition indication information.
2. If the first information includes the sixth indication information, the PCF needs to query a UDM for PEGC subscription information to determine the URSP rule.
3. The PCF determines the URSP rule based on the received first information, and provides the URSP rule to the PEGC through a UE configuration update process.
4. A PINE sends a relay request to the PEGC.
5. The PEGC matches an appropriate URSP rule based on traffic of the PINE, and selects an appropriate PDU session based on PDU session parameters in the matched URSP rule. If no PDU session has been established, the PEGC establishes a new PDU session based on the PDU session parameters in the matched URSP rule.

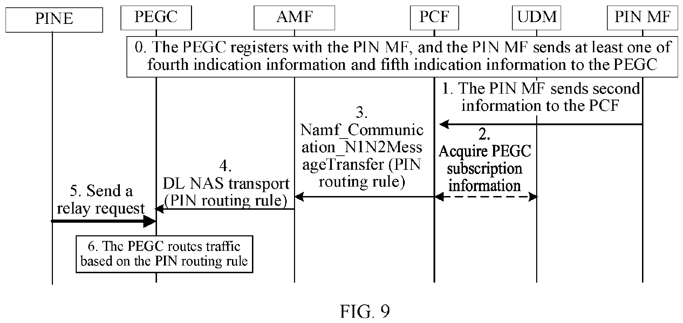

Scenario 3: As shown in FIG. 9, a first communication device (PEGC) receives a PIN routing rule sent by a second communication device (PCF), and establishes a data transmission channel based on the URSP rule.
0. The PEGC registers with a PIN MF. Optionally, in the registration process, the PIN MF may send at least one of the following to the PEGC:
   fourth indication information, that is, an indication of no URSP rule matching; and
   fifth indication information, that is, an indication that traffic of a PIN group matches a same PDU session.
1. The PIN MF sends second information to the PCF, where the second information includes at least one of the following:
   one or more PIN routing rules;
   seventh indication information, also referred to as PIN routing rule acquisition indication information; and
   eighth indication information, also referred to as an indication of no URSP rule matching.
2. If the second information includes the seventh indication information, the PCF needs to query a UDM for PEGC subscription information to determine the PIN routing rule.
3. The PCF determines the PIN routing rule based on the received second information, and invokes Namf_Communication_N1N2MessageTransfer to send the determined PIN routing rule to an AMF.
4. If the PEGC is in a connected state, the AMF includes the PIN routing rule into a DL NAS transport message and transparently transmits the PIN routing rule to the PEGC, and the PEGC stores the PIN routing rule.
5. A PINE sends a relay request to the PEGC.
6. The PEGC matches traffic of the PINE with an appropriate PDU session based on the stored PIN routing rule. If no PDU session has been established, the PEGC establishes a new PDU session based on PDU session parameters in the matched routing rule.

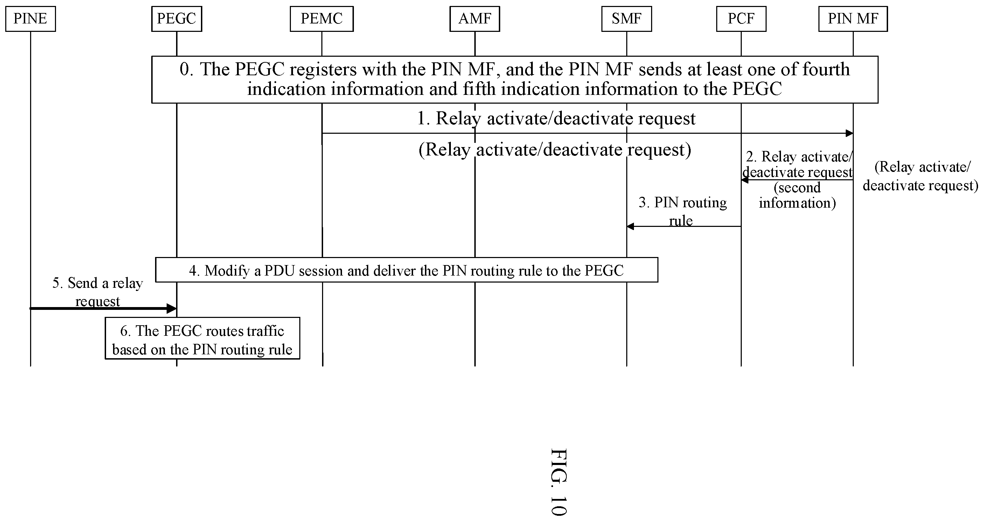

Scenario 4: As shown in FIG. 10, a first communication device (PEGC) receives a PIN routing rule sent by a second communication device (PCF), and establishes a data transmission channel based on the URSP rule.
0. The PEGC registers with a PIN MF. Optionally, in the registration process, the PIN MF may send at least one of the following to the PEGC:
   fourth indication information, that is, an indication of no URSP rule matching; and
   fifth indication information, that is, an indication that traffic of a PIN group matches a same PDU session.
1. When a PINE requests to join, a PEMC sends a relay activate request (relay activate request) or a relay deactivate request (relay deactivate request) to the PIN MF.
2. The PIN MF sends a relay activate request to the PCF, where the relay activate request carries second information, and the second information includes at least one of the following:
   one or more PIN routing rules;
   seventh indication information, also referred to as PIN routing rule acquisition indication information; and
   eighth indication information, also referred to as an indication of no URSP rule matching.
3. If the relay activate request includes the seventh indication information, the PCF needs to query a UDM for PEGC subscription information to determine the PIN routing rule. The PCF determines the PIN routing rule based on the received second information, and sends a relay activate request to an SMF, where the relay activate request includes the determined PIN routing rule.
4. The SMF generates a corresponding QoS rule based on the received PIN routing rule, and initiates a PDU session modification procedure. The PIN routing rule is delivered to the PEGC by using a PDU session modification command, and the PEGC stores the PIN routing rule.
5. The PINE sends a relay request to the PEGC.
6. The PEGC matches traffic of the PINE with an appropriate PDU session based on the stored PIN routing rule. If no PDU session has been established, the PEGC establishes a new PDU session based on PDU session parameters in the matched routing rule.

In summary, the method in this embodiment of this application is applied to the first communication device to implement differentiated processing of data of PINEs with different functions, improve transmission efficiency, and optimize transmission resources.

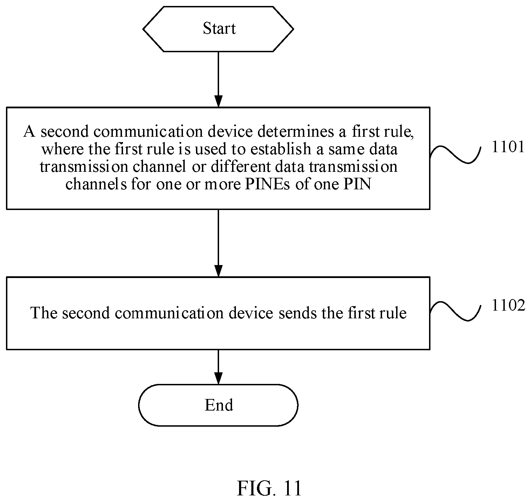

As shown in FIG. 11, an embodiment of this application provides a traffic routing method, including the following steps.

Step 1101: A second communication device determines a first rule, where the first rule is used to establish a same data transmission channel or different data transmission channels for one or more PINEs of a PIN.

Step 1102: The second communication device sends the first rule.

In this way, the second communication device determines the first rule, and sends the first rule, so that the first communication device can obtain the first rule and establish, based on the first rule, the same data transmission channel or different data transmission channels for the one or more PINEs in the PIN in which the first communication device is located, thereby implementing differentiated traffic routing for different types of PINEs and ensuring that network elements in the PIN use network services with high efficiency and high quality.

Optionally, the first rule includes a mapping relationship between PIN description information and PDU session parameters.

Optionally, in a case that the first rule is used to establish the same data transmission channel for the one or more PINEs of the PIN, the PIN description information includes at least one of the following:
a PIN type;
a service type;
a PIN identifier; and
first indication information, where the first indication information is used to indicate one or more PINEs that use network services through a PIN gateway in the PIN.

Optionally, in a case that the first rule is used to establish different data transmission channels for the one or more PINEs of the PIN, the PIN description information includes at least one of the following:
a service type;
second indication information, where the second indication information is used to indicate whether the PINE is an internal device or an external device; and
third indication information, where the third indication information is used to indicate one or more PINEs in a same group.

Optionally, the first rule is at least one of the following:
a URSP rule; and
a PIN routing rule.

Optionally, traffic description information of the URSP rule includes PIN description information.

Optionally, that a second communication device determines a first rule includes at least one of the following:
acquiring related information of a first communication device, and determining the URSP rule based on the related information of the first communication device;
acquiring first information, and determining the URSP rule based on the first information; and
acquiring second information, and determining the PIN routing rule based on the second information.

Optionally, the related information of the first communication device includes at least one of the following:
capability information of the first communication device, where the capability information of the first communication device is used to indicate that the first communication device has a gateway capability;
indication information of the first communication device, where the indication information of the first communication device is used to identify the first communication device; and
a policy container of the first communication device, where the policy container of the first communication device is used to request the URSP rule.

Optionally, the acquiring related information of a first communication device includes:
receiving, by the second communication device, a first message, where the first message includes the related information of the first communication device carried in a registration request.

Optionally, in a case that the registration request includes the capability information of the first communication device, the capability information of the first communication device is included in a PIN gateway capability information field of a third information element, and the third information element includes at least one of the following: a 5GS mobility management information element, a PIN gateway capability information element, and a 5GS update type information element; or
in a case that the registration request includes the policy container of the first communication device, the policy container of the first communication device is included in a payload container information element, and a payload container type of the payload container information element is set to a terminal policy container or a PIN gateway policy container.

Optionally, in a case that the payload container type of the payload container information element is set to the terminal policy container, the registration request includes at least one of the following:
the capability information of the first communication device; and
the indication information of the first communication device.

Optionally, in a case that the payload container type of the payload container information element is set to the PIN gateway policy container, the registration request includes at least one of the following:
a state indication message of the first communication device; and
a state indication message of the PIN in which the first communication device is located.

Optionally, the acquiring related information of a first communication device includes:
in a case that the related information of the first communication device includes only the indication information of the first communication device, the indication information of the first communication device is provided by an application function of the PIN.

Optionally, the acquiring first information includes:
receiving, by the second communication device, the first information sent by a fifth communication device, where the first information includes at least one of the following:
one or more PIN routing rules; and
sixth indication information, where the sixth indication information is used to instruct the second communication device to acquire subscription information of the first communication device from a UDM to determine the URSP rule.

Optionally, the acquiring second information includes: receiving, by the second communication device, the second information sent by a fifth communication device, where the second information includes at least one of the following:
one or more PIN routing rules;
seventh indication information, where the seventh indication information is used to instruct the second communication device to acquire subscription information of the first communication device from a UDM to determine the PIN routing rule; and
eighth indication information, where the eighth indication information is used to indicate that the second communication device does not provide the URSP rule.

Optionally, that the second communication device sends the first rule includes at least one of the following:
the second communication device sends the URSP rule to a first communication device;
the second communication device sends the PIN routing rule to a third communication device; and
the second communication device sends the PIN routing rule to a fourth communication device.

It should be noted that the method in this embodiment of this application is implemented in cooperation with the method performed by the first communication device, and that the implementation of the foregoing method embodiment is applicable to this method, with the same technical effect achieved.

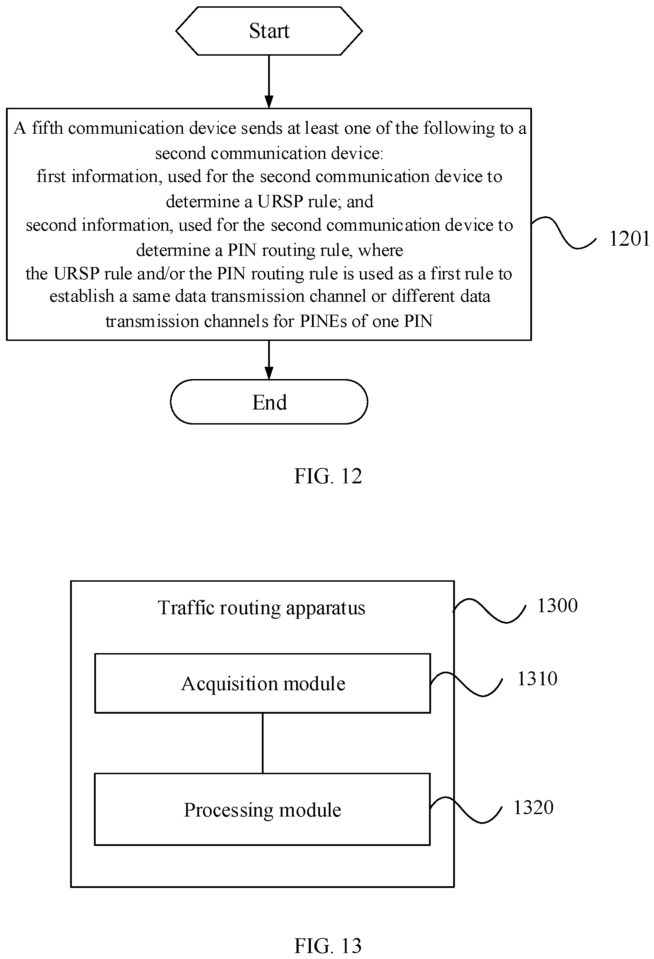

As shown in FIG. 12, an embodiment of this application provides a traffic routing method, including the following step.

Step 1201: A fifth communication device sends at least one of the following to a second communication device:
first information, used for the second communication device to determine a URSP rule; and
second information, used for the second communication device to determine a PIN routing rule, where
the URSP rule and/or the PIN routing rule is used as a first rule to establish a same data transmission channel or different data transmission channels for PINEs of a PIN.

In this way, the fifth communication device sends at least one of the first information and the second information, so that the second communication device can determine the first rule. This ensures that the first communication device establishes, based on the first rule, the same data transmission channel or different data transmission channels for the one or more PINEs in the PIN in which the first communication device is located, thereby implementing differentiated traffic routing for different types of PINEs and ensuring that network elements in the PIN use network services with high efficiency and high quality.

Optionally, the first information includes at least one of the following:
one or more PIN routing rules; and
sixth indication information, where the sixth indication information is used to instruct the second communication device to acquire subscription information of a first communication device from a UDM to determine the URSP rule.

Optionally, the second information includes at least one of the following:
one or more PIN routing rules;
seventh indication information, where the seventh indication information is used to instruct the second communication device to acquire subscription information of a first communication device from a UDM to determine the PIN routing rule; and
eighth indication information, where the eighth indication information is used to indicate that the second communication device does not provide the URSP rule.

Optionally, the method further includes:
in a case that at least one of the first information and the second information includes one or more PIN routing rules, the fifth communication device acquires PIN related information; and
the fifth communication device determines the one or more PIN routing rules based on the PIN related information.

Optionally, the method further includes:
sending at least one of the following:
fourth indication information, where the fourth indication information is used to indicate that the second communication device does not provide the URSP rule; and
fifth indication information, where the fifth indication information is used to indicate that traffic of the same PIN matches a same PDU session.

It should be noted that the method in this embodiment of this application is implemented in cooperation with the method performed by the first communication device or the method performed by the second communication device, and that the implementation of the foregoing method embodiment is applicable to this method, with the same technical effect achieved.

The traffic routing method provided in the embodiments of this application may be performed by a traffic routing apparatus. A traffic routing apparatus provided in the embodiments of this application is described by assuming that the traffic routing method is performed by the traffic routing apparatus in the embodiments of this application.

As shown in FIG. 13, an embodiment of this application provides a traffic routing apparatus 1300, including:
an acquisition module 1310, configured to acquire a first rule, where the first rule is used to establish a same data transmission channel or different data transmission channels for one or more personal Internet of Things network PIN elements PINEs of a PIN, and a first communication device and the one or more PINEs are located in the same PIN; and
a processing module 1320, configured to establish a data transmission channel based on the first rule.

Optionally, the first rule includes a mapping relationship between PIN description information and protocol data unit PDU session parameters.

Optionally, in a case that the first rule is used to establish the same data transmission channel for the one or more PINEs of the PIN, the PIN description information includes at least one of the following:
a PIN type;
a service type;
a PIN identifier; and
first indication information, where the first indication information is used to indicate one or more PINEs that use network services through a PIN gateway in the PIN.

Optionally, in a case that the first rule is used to establish different data transmission channels for the one or more PINEs of the PIN, the PIN description information includes at least one of the following:
a service type;
second indication information, where the second indication information is used to indicate whether the PINE is an internal device or an external device; and
third indication information, where the third indication information is used to indicate one or more PINEs in a same group.

Optionally, the first rule is at least one of the following:
a URSP rule; and
a PIN routing rule.

Optionally, traffic description information of the URSP rule includes PIN description information.

Optionally, the acquisition module is further configured to perform at least one of the following:
receiving the URSP rule sent by a second communication device;
receiving the PIN routing rule sent by a third communication device; and
receiving the PIN routing rule sent by a fourth communication device.

Optionally, the acquisition module is further configured to:
receive the PIN routing rule transmitted by using a downlink non-access stratum transport message, where the PIN routing rule is included in a first information element of the downlink non-access stratum transport message, and the first information element includes at least one of the following:
a payload container information element, where a payload container type of the payload container information element is set to a terminal policy container;
a payload container information element, where a payload container type of the payload container information element is set to a PIN gateway policy container; and
a PIN routing rule information element.

Optionally, the acquisition module is further configured to:
receive the PIN routing rule transmitted by using a PDU session modification command, where the PIN routing rule is included in a second information element of the PDU session modification command, and the second information element includes at least one of the following:
a serving public land mobile network PLMN rate control information element;
an extended protocol configuration option information element; and
a PIN routing rule information element.

Optionally, the apparatus further includes:
a first receiving module, configured to receive at least one of the following sent by a fifth communication device:
fourth indication information, where the fourth indication information is used to indicate that a second communication device does not provide a URSP rule; and
fifth indication information, where the fifth indication information is used to indicate that traffic of the same PIN matches a same PDU session.

Optionally, the apparatus further includes:
a third sending module, configured to send related information of the first communication device, where the related information of the first communication device includes at least one of the following:
capability information of the first communication device, where the capability information of the first communication device is used to indicate that the first communication device has a gateway capability;
indication information of the first communication device, where the indication information of the first communication device is used to identify the first communication device; and
a policy container of the first communication device, where the policy container of the first communication device is used to request a URSP rule.

Optionally, the processing module is further configured to:
determine, based on PINE description information of a first PINE, candidate rules matching the first PINE, where the candidate rules include one or more first rules; and
in a case that the candidate rules include one first rule, establish a data transmission channel for the first PINE by using the first rule; or
in a case that the candidate rules include a plurality of first rules, establish a data transmission channel for the first PINE by using a first rule with highest precedence.

After the apparatus acquires the first rule, the apparatus can establish the same data transmission channel or different data transmission channels for the one or more PINEs in the PIN in which the apparatus is located, thereby implementing differentiated traffic routing for different types of PINEs and ensuring that network elements in the PIN use network services with high efficiency and high quality.

The traffic routing apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The traffic routing apparatus provided in this embodiment of this application can implement each process implemented in the method embodiment in FIG. 2 to FIG. 10, with the same technical effect achieved. To avoid repetition, details are not described herein again.

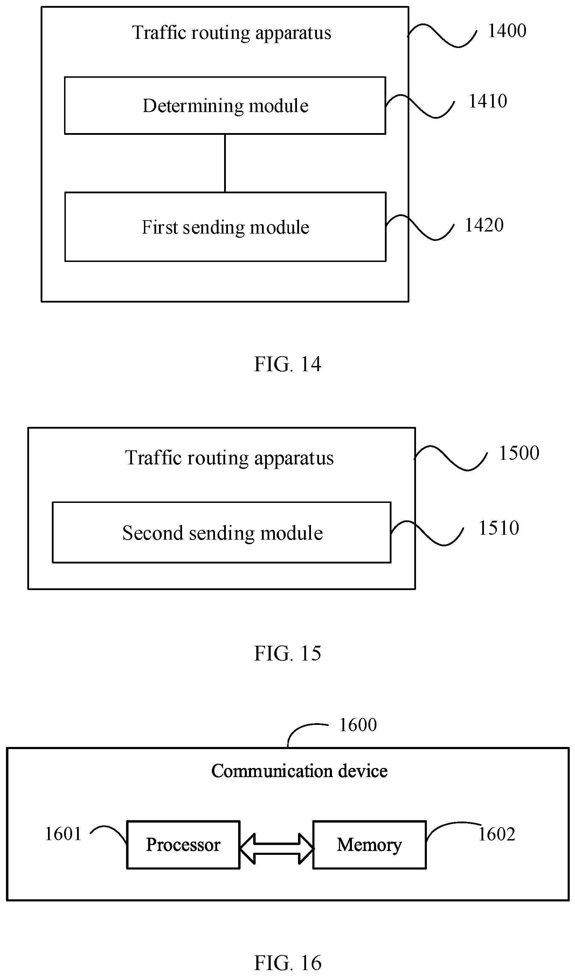

As shown in FIG. 14, an embodiment of this application provides a traffic routing apparatus 1400, including:
a determining module 1410, configured to determine a first rule, where the first rule is used to establish a same data transmission channel or different data transmission channels for one or more PINEs of a PIN; and
a first sending module 1420, configured to send the first rule.

Optionally, the first rule includes a mapping relationship between PIN description information and PDU session parameters.

Optionally, in a case that the first rule is used to establish the same data transmission channel for the one or more PINEs of the PIN, the PIN description information includes at least one of the following:
a PIN type;
a service type;
a PIN identifier; and
first indication information, where the first indication information is used to indicate one or more PINEs that use network services through a PIN gateway in the PIN.

Optionally, in a case that the first rule is used to establish different data transmission channels for the one or more PINEs of the PIN, the PIN description information includes at least one of the following:
a service type;
second indication information, where the second indication information is used to indicate whether the PINE is an internal device or an external device; and
third indication information, where the third indication information is used to indicate one or more PINEs in a same group.

Optionally, the first rule is at least one of the following:
a URSP rule; and
a PIN routing rule.

Optionally, traffic description information of the URSP rule includes PIN description information.

Optionally, the determining module is further configured to perform at least one of the following:
acquiring related information of a first communication device, and determining the URSP rule based on the related information of the first communication device;
acquiring first information, and determining the URSP rule based on the first information; and
acquiring second information, and determining the PIN routing rule based on the second information.

Optionally, the related information of the first communication device includes at least one of the following:
capability information of the first communication device, where the capability information of the first communication device is used to indicate that the first communication device has a gateway capability;
indication information of the first communication device, where the indication information of the first communication device is used to identify the first communication device; and
a policy container of the first communication device, where the policy container of the first communication device is used to request the URSP rule.

Optionally, the determining module is further configured to:
receive a first message, where the first message includes the related information of the first communication device carried in a registration request.

Optionally, in a case that the registration request includes the capability information of the first communication device, the capability information of the first communication device is included in a PIN gateway capability information field of a third information element, and the third information element includes at least one of the following: a 5GS mobility management information element, a PIN gateway capability information element, and a 5GS update type information element; or
in a case that the registration request includes the policy container of the first communication device, the policy container of the first communication device is included in a payload container information element, and a payload container type of the payload container information element is set to a terminal policy container or a PIN gateway policy container.

Optionally, in a case that the payload container type of the payload container information element is set to the terminal policy container, the registration request includes at least one of the following:
the capability information of the first communication device; and
the indication information of the first communication device.

Optionally, in a case that the payload container type of the payload container information element is set to the PIN gateway policy container, the registration request includes at least one of the following:
a state indication message of the first communication device; and
a state indication message of the PIN in which the first communication device is located.

Optionally, in a case that the related information of the first communication device includes only the indication information of the first communication device, the indication information of the first communication device is provided by an application function of the PIN.

Optionally, the determining module is further configured to:
receive the first information sent by a fifth communication device, where the first information includes at least one of the following:
one or more PIN routing rules; and
sixth indication information, where the sixth indication information is used to instruct a second communication device to acquire subscription information of the first communication device from a UDM to determine the URSP rule.

Optionally, the determining module is further configured to:
receive, by the second communication device, the second information sent by a fifth communication device, where the second information includes at least one of the following:
one or more PIN routing rules;
seventh indication information, where the seventh indication information is used to instruct the second communication device to acquire subscription information of the first communication device from a UDM to determine the PIN routing rule; and
eighth indication information, where the eighth indication information is used to indicate that the second communication device does not provide the URSP rule.

Optionally, the first sending module is further configured to perform at least one of the following:
sending the URSP rule to a first communication device;
sending the PIN routing rule to a third communication device; and
sending the PIN routing rule to a fourth communication device.

The apparatus determines the first rule, and sends the first rule, so that the first communication device can obtain the first rule and establish, based on the first rule, the same data transmission channel or different data transmission channels for the one or more PINEs in the PIN in which the first communication device is located, thereby implementing differentiated traffic routing for different types of PINEs and ensuring that network elements in the PIN use network services with high efficiency and high quality.

The traffic routing apparatus provided in this embodiment of this application can implement each process implemented in the method embodiment in FIG. 11, with the same technical effect achieved. To avoid repetition, details are not described herein again.

As shown in FIG. 15, an embodiment of this application provides a traffic routing apparatus 1500, including:
a second sending module 1510, configured to send at least one of the following to a second communication device:
first information, used for the second communication device to determine a URSP rule; and
second information, used for the second communication device to determine a PIN routing rule, where
the URSP rule and/or the PIN routing rule is used as a first rule to establish a same data transmission channel or different data transmission channels for PINEs of a PIN.

Optionally, the first information includes at least one of the following:
one or more PIN routing rules; and
sixth indication information, where the sixth indication information is used to instruct the second communication device to acquire subscription information of a first communication device from a UDM to determine the URSP rule.

Optionally, the second information includes at least one of the following:
one or more PIN routing rules;
seventh indication information, where the seventh indication information is used to instruct the second communication device to acquire subscription information of a first communication device from a UDM to determine the PIN routing rule; and
eighth indication information, where the eighth indication information is used to indicate that the second communication device does not provide the URSP rule.

Optionally, the apparatus further includes:
a PIN related information acquisition module, configured to acquire, by a fifth communication device, PIN related information in a case that at least one of the first information and the second information includes one or more PIN routing rules; and
a PIN routing rule determining module, configured to determine the one or more PIN routing rules based on the PIN related information.

Optionally, the apparatus further includes:
a fourth sending module, configured to send at least one of the following:
fourth indication information, where the fourth indication information is used to indicate that the second communication device does not provide the URSP rule; and
fifth indication information, where the fifth indication information is used to indicate that traffic of the same PIN matches a same PDU session.

The apparatus sends at least one of the first information and the second information, so that the second communication device can determine the first rule. This ensures that the first communication device establishes, based on the first rule, the same data transmission channel or different data transmission channels for the one or more PINEs in the PIN in which the first communication device is located, thereby implementing differentiated traffic routing for different types of PINEs and ensuring that network elements in the PIN use network services with high efficiency and high quality.

The traffic routing apparatus provided in this embodiment of this application can implement each process implemented in the method embodiment in FIG. 12, with the same technical effect achieved. To avoid repetition, details are not described herein again.

Optionally, as shown in FIG. 16, an embodiment of this application further provides a communication device 1600, including a processor 1601 and a memory 1602. The memory 1602 stores a program or instructions capable of running on the processor 1601. For example, when the communication device 1600 is a terminal, and the program or instructions are executed by the processor 1601, the steps of the foregoing embodiment of the traffic routing method are implemented, with the same technical effect achieved. When the communication device 1600 is a network-side device, and the program or instructions are executed by the processor 1601, the steps of the foregoing embodiment of the traffic routing method performed by the second communication device or the fifth communication device are implemented, with the same technical effect achieved. To avoid repetition, details are not described herein again.

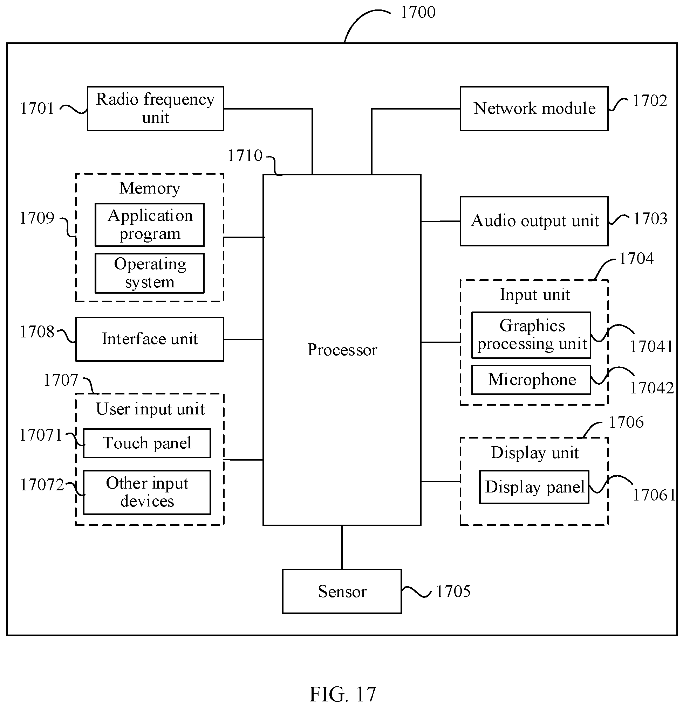

An embodiment of this application further provides a terminal, including a processor and a communication interface. The processor is configured to: acquire a first rule, where the first rule is used to establish a same data transmission channel or different data transmission channels for one or more PINEs of a PIN, and a first communication device and the one or more PINEs are located in the same PIN; and establish a data transmission channel based on the first rule. The terminal embodiment corresponds to the foregoing method embodiment on the first communication device side, and each implementation process and implementation of the foregoing method embodiment can be applied to the terminal embodiment, with the same technical effect achieved. Specifically, FIG. 17 is a schematic diagram of a hardware structure of a terminal for implementing an embodiment of this application.

The terminal 1700 includes but is not limited to at least some components such as a radio frequency unit 1701, a network module 1702, an audio output unit 1703, an input unit 1704, a sensor 1705, a display unit 1706, a user input unit 1707, an interface unit 1708, a memory 1709, and a processor 1710.

A person skilled in the art may understand that the terminal 1700 may further include a power supply (for example, a battery) supplying power to all components. The power supply may be logically connected to the processor 1710 through a power management system. In this way, functions such as charge management, discharge management, and power consumption management are implemented by using the power management system. The terminal structure shown in FIG. 17 does not constitute a limitation on the terminal. The terminal may include more or fewer components than those shown in the figure, or some components are combined, or component arrangements are different. Details are not described herein again.

It should be understood that, in this embodiment of this application, the input unit 1704 may include a graphics processing unit (Graphics Processing Unit, GPU) 17041 and a microphone 17042. The graphics processing unit 17041 processes image data of a still picture or video obtained by an image capture apparatus (such as a camera) in a video capture mode or an image capture mode. The display unit 1706 may include a display panel 17061, and the display panel 17061 may be configured in a form of a liquid crystal display, an organic light-emitting diode, or the like. The user input unit 1707 includes at least one of a touch panel 17071 and other input devices 17072. The touch panel 17071 is also referred to as a touchscreen. The touch panel 17071 may include two parts: a touch detection apparatus and a touch controller. The other input devices 17072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1701 may transmit the downlink data to the processor 1710 for processing. In addition, the radio frequency unit 1701 may send uplink data to the network-side device. Usually, the radio frequency unit 1701 includes but is not limited to an antenna, an amplifier, a transceiver, a coupler, a low noise amplifier, a duplexer, and the like.

The memory 1709 may be configured to store software programs or instructions and various data. The memory 1709 may primarily include a first storage area for storing programs or instructions and a second storage area for storing data. The first storage area may store an operating system, an application program or instructions required by at least one function (such as an audio play function and an image play function), and the like. In addition, the memory 1709 may include a volatile memory or a non-volatile memory, or the memory 1709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1709 in this embodiment of this application includes but is not limited to these and any other suitable types of memories.

The processor 1710 may include one or more processing units. Optionally, the processor 1710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1710.

The processor 1710 is configured to: acquire a first rule, where the first rule is used to establish a same data transmission channel or different data transmission channels for one or more personal Internet of Things network PIN elements PINEs of a PIN, and a first communication device and the one or more PINEs are located in the same PIN; and establish a data transmission channel based on the first rule.

Optionally, the first rule includes a mapping relationship between PIN description information and protocol data unit PDU session parameters.

Optionally, in a case that the first rule is used to establish the same data transmission channel for the one or more PINEs of the PIN, the PIN description information includes at least one of the following:
a PIN type;
a service type;
a PIN identifier; and
first indication information, where the first indication information is used to indicate one or more PINEs that use network services through a PIN gateway in the PIN.

Optionally, in a case that the first rule is used to establish different data transmission channels for the one or more PINEs of the PIN, the PIN description information includes at least one of the following:
a service type;
second indication information, where the second indication information is used to indicate whether the PINE is an internal device or an external device; and
third indication information, where the third indication information is used to indicate one or more PINEs in a same group.

Optionally, the first rule is at least one of the following:
a URSP rule; and
a PIN routing rule.

Optionally, traffic description information of the URSP rule includes PIN description information.

Optionally, the radio frequency unit 1701 is configured to perform at least one of the following:
receiving the URSP rule sent by a second communication device;
receiving the PIN routing rule sent by a third communication device; and
receiving the PIN routing rule sent by a fourth communication device.

Optionally, the radio frequency unit 1701 is configured to:
receive the PIN routing rule transmitted by using a downlink non-access stratum transport message, where the PIN routing rule is included in a first information element of the downlink non-access stratum transport message, and the first information element includes at least one of the following:
a payload container information element, where a payload container type of the payload container information element is set to a terminal policy container;
a payload container information element, where a payload container type of the payload container information element is set to a PIN gateway policy container; and
a PIN routing rule information element.

Optionally, the radio frequency unit 1701 is configured to:
receive the PIN routing rule transmitted by using a PDU session modification command, where the PIN routing rule is included in a second information element of the PDU session modification command, and the second information element includes at least one of the following:
a serving public land mobile network PLMN rate control information element;
an extended protocol configuration option information element; and
a PIN routing rule information element.

Optionally, the radio frequency unit 1701 is configured to:
receive at least one of the following sent by a fifth communication device:
fourth indication information, where the fourth indication information is used to indicate that a second communication device does not provide a URSP rule; and
fifth indication information, where the fifth indication information is used to indicate that traffic of the same PIN matches a same PDU session.

Optionally, the radio frequency unit 1701 is configured to:
send related information of the first communication device, where the related information of the first communication device includes at least one of the following:
capability information of the first communication device, where the capability information of the first communication device is used to indicate that the first communication device has a gateway capability;
indication information of the first communication device, where the indication information of the first communication device is used to identify the first communication device; and
a policy container of the first communication device, where the policy container of the first communication device is used to request a URSP rule.

Optionally, the processor 1710 is configured to:
determine, based on PINE description information of a first PINE, candidate rules matching the first PINE, where the candidate rules include one or more first rules; and
in a case that the candidate rules include one first rule, establish a data transmission channel for the first PINE by using the first rule; or
in a case that the candidate rules include a plurality of first rules, establish a data transmission channel for the first PINE by using a first rule with highest precedence.

After the terminal acquires the first rule, the terminal can establish the same data transmission channel or different data transmission channels for the one or more PINEs in the PIN in which the terminal is located, thereby implementing differentiated traffic routing for different types of PINEs and ensuring that network elements in the PIN use network services with high efficiency and high quality.

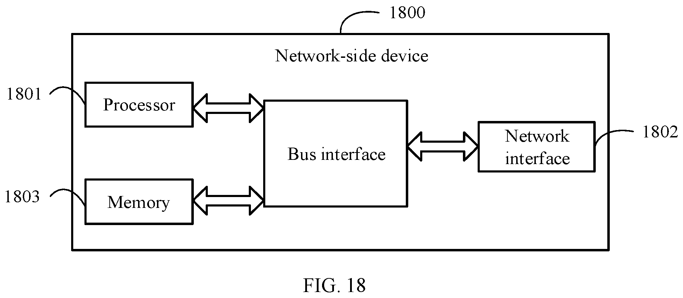

Specifically, an embodiment of this application further provides a network-side device. As shown in FIG. 18, the network-side device 1800 includes a processor 1801, a network interface 1802, and a memory 1803. The network interface 1802 is, for example, a common public radio interface (common public radio interface, CPRI).

Specifically, the network-side device 1800 in this embodiment of this application further includes a program or instructions stored in the memory 1803 and capable of running on the processor 1801. When the processor 1801 invokes the program or instruction in the memory 1803, the method performed by each module shown in FIG. 14 or FIG. 15 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing traffic routing method performed by the first communication device, or the foregoing traffic routing method performed by the second communication device, or the foregoing traffic routing method performed by the fifth communication device is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing traffic routing method performed by the first communication device, or the foregoing traffic routing method performed by the second communication device, or the foregoing traffic routing method performed by the fifth communication device, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing traffic routing method performed by the first communication device, or the foregoing traffic routing method performed by the second communication device, or the foregoing traffic routing method performed by the fifth communication device, with the same technical effect achieved. To avoid repetition, details are not described herein again.

An embodiment of this application further provides a traffic routing system, including a terminal and a network-side device. The terminal may be configured to perform the steps of the foregoing traffic routing method performed by the first communication device. The network-side device may be configured to perform the steps of the foregoing traffic routing method performed by the second communication device or the foregoing traffic routing method performed by the fifth communication device.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A traffic routing method, comprising:
acquiring, by a first communication device, a first rule, wherein the first rule is used to establish a same data transmission channel or different data transmission channels for one or more personal Internet of Things network PIN elements PINEs of a PIN, and the first communication device and the one or more PINEs are located in the same PIN; and
establishing, by the first communication device, a data transmission channel based on the first rule.

2. The method according to claim 1, wherein the first rule comprises a mapping relationship between PIN description information and protocol data unit PDU session parameters.

3. The method according to claim 2, wherein in a case that the first rule is used to establish the same data transmission channel for the one or more PINEs of the PIN, the PIN description information comprises at least one of the following:
a PIN type;
a service type;
a PIN identifier; and
first indication information, wherein the first indication information is used to indicate one or more PINEs that use network services through a PIN gateway in the PIN.

4. The method according to claim 2, wherein in a case that the first rule is used to establish different data transmission channels for the one or more PINEs of the PIN, the PIN description information comprises at least one of the following:
a service type;
second indication information, wherein the second indication information is used to indicate whether the PINE is an internal device or an external device; and
third indication information, wherein the third indication information is used to indicate one or more PINEs in a same group.

5. The method according to any one of claims 1 to 4, wherein the first rule is at least one of the following:
a URSP rule; and
a PIN routing rule.

6. The method according to claim 5, wherein traffic description information of the URSP rule comprises PIN description information.

7. The method according to claim 5, wherein the acquiring, by a first communication device, a first rule comprises at least one of the following:
receiving the URSP rule sent by a second communication device;
receiving the PIN routing rule sent by a third communication device; and
receiving the PIN routing rule sent by a fourth communication device.

8. The method according to claim 7, wherein the receiving the PIN routing rule sent by a third communication device comprises:
receiving the PIN routing rule transmitted by using a downlink non-access stratum transport message, wherein the PIN routing rule is comprised in a first information element of the downlink non-access stratum transport message, and the first information element comprises at least one of the following:
a payload container information element, wherein a payload container type of the payload container information element is set to a terminal policy container;
a payload container information element, wherein a payload container type of the payload container information element is set to a PIN gateway policy container; and
a PIN routing rule information element.

9. The method according to claim 7, wherein the receiving the PIN routing rule sent by a fourth communication device comprises:
receiving the PIN routing rule transmitted by using a PDU session modification command, wherein the PIN routing rule is comprised in a second information element of the PDU session modification command, and the second information element comprises at least one of the following:
a serving public land mobile network PLMN rate control information element;
an extended protocol configuration option information element; and
a PIN routing rule information element.

10. The method according to claim 1, further comprising:
receiving at least one of the following sent by a fifth communication device:
fourth indication information, wherein the fourth indication information is used to indicate that a second communication device does not provide a URSP rule; and
fifth indication information, wherein the fifth indication information is used to indicate that traffic of the same PIN matches a same PDU session.

11. The method according to claim 1, wherein the method further comprises:
sending, by the first communication device, related information of the first communication device, wherein the related information of the first communication device comprises at least one of the following:
capability information of the first communication device, wherein the capability information of the first communication device is used to indicate that the first communication device has a gateway capability;
indication information of the first communication device, wherein the indication information of the first communication device is used to identify the first communication device; and
a policy container of the first communication device, wherein the policy container of the first communication device is used to request a URSP rule.

12. The method according to claim 1, wherein the establishing, by the first communication device, a data transmission channel based on the first rule comprises:
determining, by the first communication device based on PINE description information of a first PINE, candidate rules matching the first PINE, wherein the candidate rules comprise one or more first rules; and
in a case that the candidate rules comprise one first rule, establishing a data transmission channel for the first PINE by using the first rule; or
in a case that the candidate rules comprise a plurality of first rules, establishing a data transmission channel for the first PINE by using a first rule with highest precedence.

13. A traffic routing method, comprising:
determining, by a second communication device, a first rule, wherein the first rule is used to establish a same data transmission channel or different data transmission channels for one or more PINEs of a PIN; and
sending, by the second communication device, the first rule.

14. The method according to claim 13, wherein the first rule comprises a mapping relationship between PIN description information and PDU session parameters.

15. The method according to claim 14, wherein in a case that the first rule is used to establish the same data transmission channel for the one or more PINEs of the PIN, the PIN description information comprises at least one of the following:
a PIN type;
a service type;
a PIN identifier; and
first indication information, wherein the first indication information is used to indicate one or more PINEs that use network services through a PIN gateway in the PIN.

16. The method according to claim 14, wherein in a case that the first rule is used to establish different data transmission channels for the one or more PINEs of the PIN, the PIN description information comprises at least one of the following:
a service type;
second indication information, wherein the second indication information is used to indicate whether the PINE is an internal device or an external device; and
third indication information, wherein the third indication information is used to indicate one or more PINEs in a same group.

17. The method according to any one of claims 13 to 16, wherein the first rule is at least one of the following:
a URSP rule; and
a PIN routing rule.

18. The method according to claim 17, wherein traffic description information of the URSP rule comprises PIN description information.

19. The method according to claim 17, wherein the determining, by a second communication device, a first rule comprises at least one of the following:
acquiring related information of a first communication device, and determining the URSP rule based on the related information of the first communication device;
acquiring first information, and determining the URSP rule based on the first information; and
acquiring second information, and determining the PIN routing rule based on the second information.

20. The method according to claim 19, wherein the related information of the first communication device comprises at least one of the following:
capability information of the first communication device, wherein the capability information of the first communication device is used to indicate that the first communication device has a gateway capability;
indication information of the first communication device, wherein the indication information of the first communication device is used to identify the first communication device; and
a policy container of the first communication device, wherein the policy container of the first communication device is used to request the URSP rule.

21. The method according to claim 20, wherein the acquiring related information of a first communication device comprises:
receiving, by the second communication device, a first message, wherein the first message comprises the related information of the first communication device carried in a registration request.

22. The method according to claim 21, wherein
in a case that the registration request comprises the capability information of the first communication device, the capability information of the first communication device is comprised in a PIN gateway capability information field of a third information element, and the third information element comprises at least one of the following: a 5GS mobility management information element, a PIN gateway capability information element, and a 5GS update type information element; or
in a case that the registration request comprises the policy container of the first communication device, the policy container of the first communication device is comprised in a payload container information element, and a payload container type of the payload container information element is set to a terminal policy container or a PIN gateway policy container.

23. The method according to claim 22, wherein in a case that the payload container type of the payload container information element is set to the terminal policy container, the registration request comprises at least one of the following:
the capability information of the first communication device; and
the indication information of the first communication device.

24. The method according to claim 22, wherein in a case that the payload container type of the payload container information element is set to the PIN gateway policy container, the registration request comprises at least one of the following:
a state indication message of the first communication device; and
a state indication message of the PIN in which the first communication device is located.

25. The method according to claim 20, wherein in a case that the related information of the first communication device comprises only the indication information of the first communication device, the indication information of the first communication device is provided by an application function of the PIN.

26. The method according to claim 19, wherein the acquiring first information comprises:
receiving, by the second communication device, the first information sent by a fifth communication device, wherein the first information comprises at least one of the following:
one or more PIN routing rules; and
sixth indication information, wherein the sixth indication information is used to instruct the second communication device to acquire subscription information of the first communication device from a UDM to determine the URSP rule.

27. The method according to claim 19, wherein the acquiring second information comprises:
receiving, by the second communication device, the second information sent by a fifth communication device, wherein the second information comprises at least one of the following:
one or more PIN routing rules;
seventh indication information, wherein the seventh indication information is used to instruct the second communication device to acquire subscription information of the first communication device from a UDM to determine the PIN routing rule; and
eighth indication information, wherein the eighth indication information is used to indicate that the second communication device does not provide the URSP rule.

28. The method according to claim 17, wherein the sending, by the second communication device, the first rule comprises at least one of the following:
sending, by the second communication device, the URSP rule to a first communication device;
sending, by the second communication device, the PIN routing rule to a third communication device; and
sending, by the second communication device, the PIN routing rule to a fourth communication device.

29. A traffic routing method, comprising:
sending, by a fifth communication device, at least one of the following to a second communication device:
first information, used for the second communication device to determine a URSP rule; and
second information, used for the second communication device to determine a PIN routing rule, wherein
the URSP rule and/or the PIN routing rule is used as a first rule to establish a same data transmission channel or different data transmission channels for PINEs of a PIN.

30. The method according to claim 29, wherein the first information comprises at least one of the following:
one or more PIN routing rules; and
sixth indication information, wherein the sixth indication information is used to instruct the second communication device to acquire subscription information of a first communication device from a UDM to determine the URSP rule.

31. The method according to claim 29, wherein the second information comprises at least one of the following:
one or more PIN routing rules;
seventh indication information, wherein the seventh indication information is used to instruct the second communication device to acquire subscription information of a first communication device from a UDM to determine the PIN routing rule; and
eighth indication information, wherein the eighth indication information is used to indicate that the second communication device does not provide the URSP rule.

32. The method according to claim 29, further comprising:
in a case that at least one of the first information and the second information comprises one or more PIN routing rules, acquiring, by the fifth communication device, PIN related information; and
determining, by the fifth communication device, the one or more PIN routing rules based on the PIN related information.

33. The method according to claim 29, further comprising:
sending at least one of the following:
fourth indication information, wherein the fourth indication information is used to indicate that the second communication device does not provide the URSP rule; and
fifth indication information, wherein the fifth indication information is used to indicate that traffic of the same PIN matches a same PDU session.

34. A traffic routing apparatus, comprising:
an acquisition module, configured to acquire a first rule, wherein the first rule is used to establish a same data transmission channel or different data transmission channels for one or more PINEs of a PIN, and a first communication device and the one or more PINEs are located in the same PIN; and
a processing module, configured to establish a data transmission channel based on the first rule.

35. A traffic routing apparatus, comprising:
a determining module, configured to determine a first rule, wherein the first rule is used to establish a same data transmission channel or different data transmission channels for one or more PINEs of a PIN; and
a first sending module, configured to send the first rule.

36. A traffic routing apparatus, comprising:
a second sending module, configured to send at least one of the following to a second communication device:
first information, used for the second communication device to determine a URSP rule; and
second information, used for the second communication device to determine a PIN routing rule, wherein
the URSP rule and/or the PIN routing rule is used as a first rule to establish a same data transmission channel or different data transmission channels for one or more PINEs of a PIN.

37. A terminal, comprising a processor and a memory, wherein the memory stores a program or instructions capable of running on the processor, and when the program or instructions are executed by the processor, the steps of the traffic routing method according to any one of claims 1 to 12 are implemented.

38. A network-side device, comprising a processor and a memory, wherein the memory stores a program or instructions capable of running on the processor, and when the program or instructions are executed by the processor, the traffic routing method according to any one of claims 13 to 28 is implemented, or the steps of the traffic routing method according to any one of claims 29 to 33 are implemented.

39. A readable storage medium, wherein the readable storage medium stores a program or instructions, and when the program or instructions are executed by a processor, the traffic routing method according to any one of claims 1 to 12 is implemented, or the traffic routing method according to any one of claims 13 to 28 is implemented, or the steps of the traffic routing method according to any one of claims 29 to 33 are implemented.
